# EUROPEAN PATENT APPLICATION

(11) **EP 3 680 748 A1**
(43) Date of publication of application: **15.07.2020**
(21) Application number: 19151329.0
(22) Date of filing: 11.01.2019
(51) Int. Cl.: G06F 1/16

(54) **SMARTPHONE CASE COVER WITH KEYPAD**

(71) Applicant: Vestel Elektronik Sanayi ve Ticaret A.S., 45030 Manisa (TR)
(72) Inventor: KURALAY, Fatih, 45030 Manisa (TR); DEMIR, Fatih, 45030 Manisa (TR)
(74) Representative: Kehl, Ascherl, Liebhoff & Ettmayr Patentanwälte Partnerschaft mbB

(57) **Abstract**

A system 10 comprising a mobile equipment 1 comprising a first touchscreen display 3 and a second touchscreen display 4 separated from the first touchscreen display 3 on a front side of the mobile equipment 1; and a mobile equipment case cover 5 with keypad 11 for operating the mobile equipment 1 is disclosed.

## Description

### FIELD OF THE INVENTION

The invention relates to a system 10 comprising a mobile equipment 1 comprising a first touchscreen display 3 and a second touchscreen display 4 separated from the first touchscreen display 3 on a front side of the mobile equipment 1; and a mobile equipment 1 case cover 5 with keypad 11 for operating the mobile equipment 1.

### BACKGROUND

Modern user equipment like smartphones offer basic functions like telephoning or short message service which had been in use since almost the beginning of mobile communication systems. Nowadays many of the modern user equipments offer more advanced and resource consuming applications which had been previously only used on personal computers like office related applications, games, health related applications, sport or activity related applications. These more advanced applications also interact with various sensors of a smartphone like a camera, GPS, gyroscope, light sensors etc. which were not contained in the user equipment of the first generations. Not all people want to use those more advanced applications available all the time. For example, elderly people often prefer to use only the basic functions of a smartphone and thus often a traditional user equipment not providing the advanced functions of a smartphone may be sufficient for this group of people. However, at occasion even this group of people still wants to use the more advance applications and functions of a smartphone which the interaction with or display via the large screen of a smartphone integrated into the front side of a smartphone.

To address this demand, for example DE 10 2015 100 344 A1 discloses a cover for a smartphone which provides on one side a traditional keypad providing only a limited number of keys (less than 20) and on the backside an execution side capable of interacting with the capacitive touch screen of the smartphone. The keypad is not covering the entire display of the smartphone and the area not covered can be used as a display when the cover is attached to the display of the smartphone.

However, even if this cover is used the entire screen of the smartphone remains active and draws electric energy from the battery.

### OBJECT OF THE INVENTION

Therefore, it is an object of the present disclosure to provide an improved system overcoming the drawbacks of the prior art.

### SUMMARY OF THE INVENTION

The object has been solved with the subject matter defined in the appended claims.

A system 10 is provided comprising
a. mobile equipment 1 comprising a first touchscreen display 3 and a second touchscreen display 4 separated from the first touchscreen display 3 on a front side of the mobile equipment 1; and
b. mobile equipment 1 case cover 5 with keypad 11 for operating the mobile equipment 1.

This system 10 has the advantage that one of the touchscreen displays can be deactivated because the two touchscreen displays are separated from each other and thus can be operated superlatively.

The first touchscreen display 3 and the second touchscreen display 4 can be separately powered. In this way, the operation of the two touchscreen displays 3, 4 can be provided with electric energy only when the respective display is used. Accordingly, electric energy can be saved.

The ratio of the surface area of the second touchscreen display 4 to the surface are of first touchscreen display 3 is 50:50, at least 55:45,60:40, at least 70:30, at least 80:20, or at least 90:10. Thus, the first touchscreen display 3 may have a small size thereby further reducing the consumption of electric energy.

The first touchscreen display 3 and the second touchscreen display 4 may comprise liquid crystal displays. Liquid crystal displays consume a relatively high amount of electric energy and thus the disclosed system 10 is especially useful for liquid crystal displays.

The keypad 11 may comprise push-buttons which provide the advantage that some users prefer the haptic experience of those buttons.

The mobile equipment 1 case cover 5 may be operatively coupled to the equipment 1 case cover 5 by a wired or wireless connection. This provides the advantage that first touchscreen displayed can be completely disconnected from the electric source if required.

The mobile equipment 1 case cover 5 may comprise a first portion covering the front side of the mobile equipment 1, the first portion comprising a first subsection of the first portion comprising a recess 6 and a second subsection of the first portion comprising the keyboard and the first subsection is configured to cover the first touchscreen display 3 and the second subsection is configured to cover the second touchscreen display 4.

The recess 6 may comprise a transparent material or no material.

The mobile equipment case cover 5 may further comprise a second portion for covering a back side of the mobile equipment 1 and the first portion and the second portion are connected by flexible hinge region 12. This provides the advantage that the case cover can cover the user equipment in a flip flap manner.

The System 10 may further comprise a processor configured to determine by a sensor whether the mobile equipment case cover 5 is attached to the front side of the mobile equipment 1. In this way, it can be automatically determined whether the case cover is attached to the front side of the mobile equipment 1.

The sensor may be a Hall Sensor.

The processor may be configured to, when the case cover 5 is attached to the front side of the mobile equipment 1, deactivate the functional elements configured to sense a touch of the first touchscreen display 3, activate or keep activated functional elements configured to provide the actual visual display of the first touchscreen display 3, to restrict the communication functions of the user equipment 1 to calling and SMS functions, deactivate at least one of a multiplicity of processors cores, and/or reduce a processing rate of the processor.

Thus, further energy saving may be provided.

The processor may be configured to, when the case cover 5 is attached to the front side of the mobile equipment 1, to increase the font size of characters displayed in the first touchscreen display 3.

Thus, the interaction of the user with the user equipment is enhanced, in particular, when the user has problems reading characters of rather small font size.

The processor may be configured to, when the case cover 5 is not or not attached to the front side of the mobile equipment 1, to activate the first touchscreen display 3 and the second touchscreen display 4, increase the processing rate of the processor; activate a multiplicity of processors cores and/or activate all available communication functions of the user equipment 1.

Thus, the user equipment can provide or restore the normal function of the user equipment automatically. Again, this may be achieved by the use of a proximity sensor, e.g., a Hall sensor.

The processor may be configured to, when the case cover 5 is not or not attached to the front side of the mobile equipment 1, use the activated first touchscreen display 3 and the second touchscreen display 4 operatively as a single display. Thus, the user equipment can provide or restore the normal function of the user equipment automatically, in particular, the provision of a large screen for display.

### BRIEF DESCRIPTION OF THE FIGURES

Figure 1 illustrates a mobile equipment 1 comprising two separated touchscreens.
Figure 2 illustrates a mobile equipment case cover 5 in an opened up state for the mobile equipment 1 disclosed herein.
Figure 3 illustrates a mobile equipment case cover 5 in an opened up state with the mobile equipment 1 inserted into the mobile equipment 1 case cover 5.
Figure 4 illustrates a mobile equipment case cover 5 in a closed state with the mobile equipment 1 inserted into the mobile equipment case cover 5.

### DETAILED DESCRIPTION OF THE FIGURES

A system 10 is described comprising a mobile equipment 1 comprising a first touchscreen display 3 and a second touchscreen display 4 separated from the first touchscreen display 3 on a front side of the mobile user equipment 2; and a mobile equipment case cover 5 with keypad 11 for operating the mobile equipment 1. The mobile equipment 1 and the case cover 5 can also be provided independently. In the following the mobile equipment 1 and the case cover 5 as well their modes of interaction will be described in more detail.

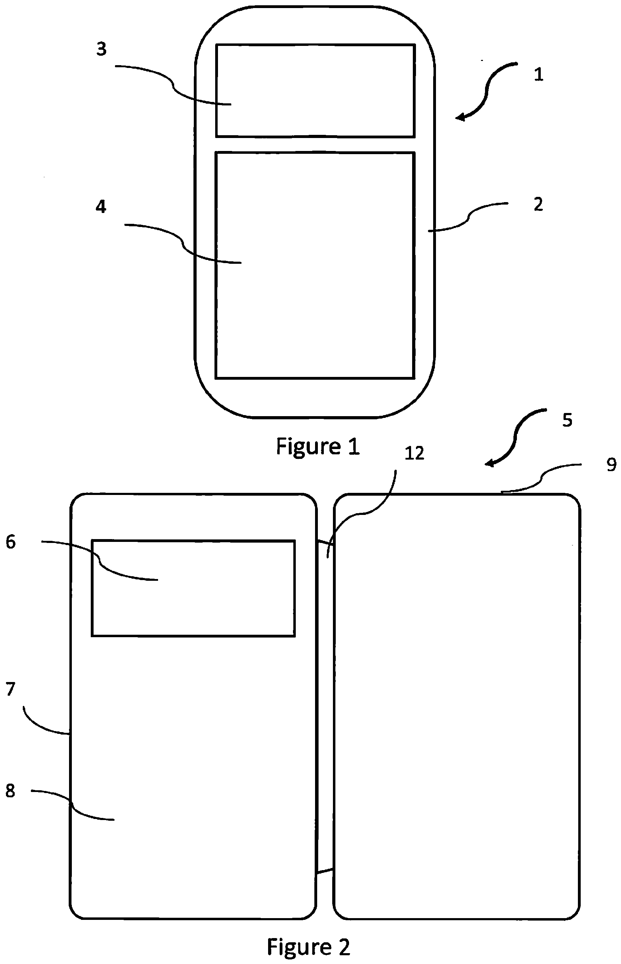

Provided is a mobile user equipment 1 as illustrated in figure 1 comprising a first and second touchscreen display 3, 4. The mobile user equipment 1 includes but is not limited to a smart phone, a touch screen communication device, a touch screen information processing system, a touch screen enabled portable communication devices and similar devices. The mobile user equipment 1 may also comprise the usual elements of a user equipment 1, for example, one or more processors (e.g. at least one multiple core processor with 2, 4, 6, 8, 16 or more cores), a memory, a bus system 10, sensors, antennas, communication interfaces for wireless or wired data transfer and a battery.

A mobile user equipment 1 comprises a front side 2 and a back side connected by lateral sides (not shown in the figures). The first and second touchscreen display 3, 4 are positioned on one side of the mobile user equipment 1, i.e. usually the front side. The first and second touchscreen display 3, 4 are separated from each other which means that they can be operated independent from each other. In particular, they can be disconnected from or connected to a power source independently from each other, i.e. separately powered.

The first and second touchscreen display 3, 4 on the front side 2 in combination may occupy 70%, 80%, 90%, 100% of the area of the front side 2 of the mobile user equipment 1. The first and second touchscreen display 3, 4 may also cover a part of or entirely the lateral sides or/and part or the back side of the mobile user equipment 1.

The ratio of the surface area of the second touchscreen display 4 to the surface are of first touchscreen display 3 may be 50:50, at least 55:45, at least 60:40, at least 70:30, 80:20, or at least 90:10. A smaller first touchscreen display 3 will result in higher energy savings when operating the case cover 5 with only the first touchscreen display 3.

The first and second touchscreen display 4 may be separated by a gap occupying less than 30%, 20%, 10%, 5% of the area of the front side of the mobile user equipment 1, or preferably not containing any gap visible to the human eye.

Touchscreens like those disclosed herein usually consist of two functional elements. The first functional element provides the actual visual display, e.g. liquid crystal display, LCD, or organic light-emitting diode, OLED, display. The second functional element provides elements for sensing a touch. It is contemplated that in the second touchscreen display 4 only the elements for providing the actual visual display are deactivated or both the elements for providing the actual visual display and for sensing a touch are deactivated. In the latter embodiment, the input via the keypad 11 is to be forwarded to the mobile user equipment 1 not via the second touchscreen display 4. Instead, the input from the keypad 11 is communicated via a different communication interface of the case cover 5, i.e. wirelessly or by a wire (or cable) to a communication interface of the mobile user equipment 1 (not shown in the figures).

Preferably, the first and second touchscreen display 4 comprise an LCD display.

It is also contemplated that second functional elements configured to sense a touch are deactivated in first touchscreen display 3 when the cover is closed and the first and second functional elements are provided in the second touchscreen display 4.
It is also contemplated that second functional elements configured to sense a touch are not provided in the first touchscreen display 3 and the first and second functional elements are provided in the second touchscreen display 4.

The first and second touchscreen display 3, 4 can independently comprise a resistive, surface acoustic wave, capacitive, optical imaging, acoustic recognition touchscreen display, preferably a capacitive touchscreen display.

The mobile user equipment 1 can also comprise as one of its sensors a proximity sensor, e.g. a Hall sensor, configured to determine whether a case cover 5 is attached to its front side or not, or any other sensor suitable for that purpose.

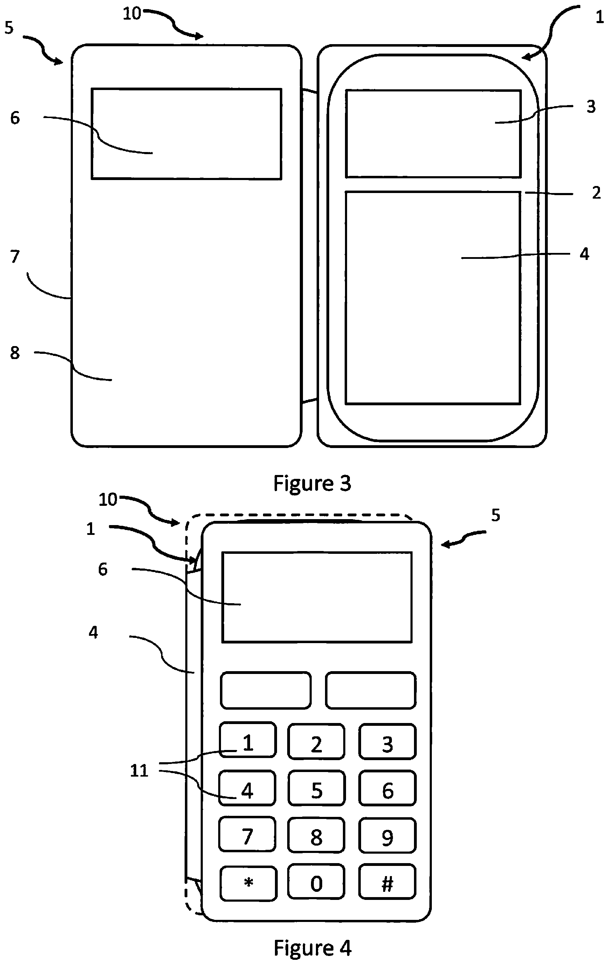

Figures 2 and 3 illustrate a case cover 5 which is shown in an opened and a closed state. The case cover 5 is provided to cover the mobile device.

The case cover 5 comprises a keypad 11. The case cover 5 may comprise an interface for communication with the mobile user equipment 1 or/and a build-in power source like a battery (rechargeable or not rechargeable) or be configured to draw electric power from the mobile user equipment 1 in a wireless (e.g. inductive transfer of electric current) or wired manner.

The case cover 5 comprises at least a first portion and covers the front side of the mobile equipment 1. The first portion comprises a front side and a back side. The first portion comprises a first subsection of the first portion comprising a recess 6 and a second subsection of the first portion comprising the keyboard on the front side and the first subsection is configured to cover the first touchscreen display 3 and the second subsection is configured to cover the second touchscreen display 4, i.e. the first and second subsection corresponding in size and shape to the first and second touchscreen display.

Figure 2 shows an example where the case cover 5 covers the mobile device in a flip flap manner, i.e. consists of two portions, a first portion of the case cover 5 comprising the keypad 11 and a second portion of the case cover 5 section for receiving the user equipment 1, wherein the first and the second portion are connected by a flexible hinge region 12. However, other configurations are contemplated, like a sleeve or a case cover 5 that is solely attached to the front side of the mobile user equipment 1. The flexible hinge region or any region connecting the first and second portion may comprise wire or cables for connection the case cover 5 and the user equipment 3.

The recess 6 may comprise a transparent material or no material and is configured to allow to view the first touchscreen display 3 through the recess 6. The first subsection of the first portion of the case cover 5 comprising the recess 6 may also comprise a frame at its edges between which the transparent material is positioned.

The second subsection of the first portion of the case cover 5 and comprising the keypad 11 on the front side has a corresponding region of the backside of the first portion. This region may comprise electric elements which can interact with the second touchscreen display 4 as an interface for communicating with the user equipment 1. Such electric elements are known in the art, for example, the execution side described in DE 10 2015 100 344 A1. Alternatively, this region on the backside of the second subsection of the first portion of the case cover 5 comprises no electric elements which can interact with the second touchscreen display 4 as an interface for communicating with the user equipment 1. Instead, interaction with the user equipment 1 is provided the communication interface for wireless or wired communication. For example, the communication interface provides a connection by cable with the user equipment 1 using any suitable communication standard compatible with the respective user equipment 1 (e.g. USB, UART, serial interface, e.g. RS232). In a further alternative, the communication interface provides wireless communication, by a communication module for Wi-Fi or another wireless standard, like Bluetooth.

The keypad 11 can provide the appearance and functionality of a keypad 11 as used on user equipment lacking a touchscreen. The keypad 11 may comprise 30, 25, or 20 or less keys. The keys may be push-buttons. Push-buttons are buttons which comprise a flexible structure like a spring which bias the button after pushing the button back into its original position. However, it is contemplated that keys are also touch-sensitive, for example, capacitive keys without any mechanical system for returning a key into a biased position.

Figure 4 illustrates the case cover 5 attached to the mobile user equipment 1. In this embodiment, the case cover 5 envelopes the mobile user equipment 1 when the case cover 5 is in a closed state and the keypad 11 covers the second touchscreen display 4 and allows a free view on the first touchscreen display 3.

In the following it will be described how the interaction of the case cover 5 and the mobile user equipment 1 can be used to increase energy consumption efficiency and user experience.

The user equipment 1 is configured to determine, for example, by its processor and a sensor of the user equipment 1 whether the case cover 5 is attached to the front side of the user equipment 1. For example, in the embodiment of a case cover 5 that can be opened or closed in a flip flap manner the user equipment 1 can determine whether the case cover 5 is closed or open. The sensor can be a proximity sensor, for example, a Hall sensor.

When is determined that the case cover 5 is attached to the front side of the mobile equipment 1, the user equipment 1 is configured to deactivate the second touchscreen display 4, to restrict the communication functions of the user equipment 1 to calling (telephone) and SMS functions, deactivate at least one of a multiplicity of processors cores, deactivate at least one sensor (preferably with the exception of the proximity sensor for detecting whether the case cover 5 is attached to the user equipment 3), and/or reduce a processing rate of the processor. This provides the advantage that the consumption of electric energy is reduced.

Each of the actions that occurs in response to the determination that the case cover 5 is attached to the front side of the mobile equipment 1, or not, may be defined in predefined settings of the user equipment 1. The user can modify the settings which can be stored in the memory of the user equipment 1.

Moreover, the user equipment 1 may be further configured to adapt the predefined settings stored in the memory and used for displaying on the first touchscreen display 3. For example, the setting may be adapted in a way that the information displayed in the first touchscreen display 3 is changed and only information to incoming calls or SMS is displayed or in response to an input of the user on the keyboard of the case cover 5 only those characters are displayed which correspond to the keys touched by the user. The user equipment 1 may be further configured to increase the font size of the characters (e.g. by 10%, 20%, 30%, 40%, 50%, 100% or 200%) displayed in the first touchscreen display 3 compared to the condition where the case cover 5 is not attached to the front side of the user equipment 1. Again, the font size for the first touchscreen display 3 may be defined by the user in the settings of the user equipment 1.

Deactivation of the second touchscreen means that at least those functions of the touchscreen display for visual display are deactivated and no longer require electric energy. Deactivation of the second touchscreen can also comprise deactivating those functions of the second touchscreen relating to sensing of a touch. In this way, the energy efficiency is further increased. In that case, the communication of the keypad 11 with the user equipment 1 is provided by a wireless communication of the keypad 11, for example, via a build in processor and wireless communication interface for WIFI, Bluetooth, or any successors of these standards.

More preferably, the communication of the keypad 11 with the user equipment 1 is provided by a wired communication interface which is connected by cable with the user equipment 1 using any suitable communication standard compatible with the respective user equipment 1 (e.g. USB, UART, serial interface, e.g. RS232). This allows to even further reduce energy consumption and obviates the need for a separate energy source in the case cover 5 and overall requires less electric energy than by wireless communication.

On the other hand, the user equipment 1 is configured to determine, for example, by its processor and a sensor of the user equipment 1 whether the case cover 5 is not or no longer attached to the front side of the user equipment 1. For example, in the embodiment of a case cover 5 that can be opened or closed in a flip flap manner the user equipment 1 can determine that the case cover 5 is open or has been opened. The sensor can be a proximity sensor, for example, a Hall sensor.

When is determined that the case cover 5 is attached to the front side of the mobile equipment 1, the user equipment 1 is configured to activate the second touchscreen display 4, to provide all communication functions of the user equipment 1, (re)activate more than one of a multiplicity of processors cores, and/or increase a processing rate of the processor. The processor may be further configured to, when the case cover 5 is not or not attached to the front side of the mobile equipment 1, use the activated first touchscreen display 3 and the second touchscreen display 4 operatively as a single display. This means displayed items are not mirrored between the two displays, but presented distributed over the two displays (which may be called an extension mode).

The features described above provide the advantage that the functions of the user equipment 1 are restored to their full functionality automatically when the case cover 5 is detached from the user equipment 1.

As stated above, any of the possible activation and deactivation measures in response to an attachment or removal of the case cover 5 from the user equipment 1 may be preconfigured in the user equipment 1 by a user by amending the settings stored in the memory of the user equipment 1.

Accordingly, a system is provided that allows to reduce energy consumption of a user equipment 1, especially, a smartphone while improving the user experience.

Thus, a system 10 is described comprising a mobile equipment 1 comprising a first touchscreen display 3 and a second touchscreen display 4 separated from the first touchscreen display 3 on a front side of the mobile equipment 1; and a mobile equipment case cover 5 with keypad 11 for operating the mobile equipment 1 is disclosed.

### REFERENCE NUMERALS

- 1: User equipment
- 2: Front side of user equipment
- 3: First touchscreen display
- 4: Second touchscreen display
- 5: Case cover
- 6: Recess
- 7: First portion of case cover
- 8: Backside of first portion of case cover
- 9: Second portion
- 10: System
- 11: Keypad (with several keys)
- 12: Flexible hinge region

## Claims

1. System (10) comprising
a. mobile equipment (1) comprising a first touchscreen display (3) and a second touchscreen display (4) separated from the first touchscreen display (3) on a front side (2) of the mobile equipment (1); and
b. mobile equipment case cover (5) with keypad (11) for operating the mobile equipment (1).

2. System (10) of claim 1, wherein the first touchscreen display (3) and the second touchscreen display (4) are separately powered.

3. System (10) according to any of the preceding claims, wherein the ratio of the surface area of the second touchscreen display (4) to the surface are of first touchscreen display (3) is 50:50, at least 55:45, 60:40, at least 70:30, at least 80:20, or at least 90:10.

4. System (10) according to any of the preceding claims, wherein the first touchscreen display (3) and the second touchscreen display (4) comprise a liquid crystal display.

5. System (10) according to any of the preceding claims, wherein the keypad (11) comprises push-buttons.

6. System (10) according to any of the preceding claims, wherein the mobile equipment case cover (5) is operatively coupled to the equipment (1) case cover (5) by a wired or wireless connection.

7. System (10) according to any of the preceding claims, wherein the mobile equipment case cover (5) comprises a first portion covering the front side of the mobile equipment (1), the first portion comprising a first subsection of the first portion comprising a recess (6) and a second subsection of the first portion comprising the keyboard and the first subsection is configured to cover the first touchscreen display (3) and the second subsection is configured to cover the second touchscreen display (4).

8. System (10) according claim 7, wherein the recess (6) comprises a transparent material or no material.

9. System (10) according to claims 7 or 8, wherein the mobile equipment (1) case cover (5) further comprises a second portion for covering a back side of the mobile equipment (1) and the first portion and the second portion are connected by flexible hinge region (12).

10. System (10) according to any of the preceding claims, further comprising a processor configured to determine by a sensor whether the mobile equipment case cover (5) is attached to the front side of the mobile equipment (1).

11. System (10) according to claim 10, wherein the sensor is a proximity sensor, preferably a Hall sensor.

12. System (10) according to claims 10 or 11, wherein the processor is configured to, when the case cover (5) is attached to the front side of the mobile equipment (1), to deactivate the second touchscreen display (4), restrict the communication functions of the user equipment (1) to calling and SMS functions, deactivate at least one of a multiplicity of processors cores, and/or reduce a processing rate of the processor.

13. System (10) according to any of claims 10-12, wherein the processor is configured to,
when the case cover (5) is attached to the front side of the mobile equipment (1), increase the font size of characters displayed in the first touchscreen display (3).

14. System (10) according to any of claims 10-13, wherein the processor is configured to,
when the case cover (5) is not or not attached to the front side of the mobile equipment (1), activate the first touchscreen display (3) and the second touchscreen display (4), increase the processing rate of the processor; activate a multiplicity of processors cores and/or activate all available communication functions of the user equipment 1.

15. System (10) according to any of claims 10-14, wherein the processor is configured to, when the case cover (5) is not or not attached to the front side of the mobile equipment (1), use the activated first touchscreen display (3) and the second touchscreen display (4) operatively as a single display.
